# EUROPEAN PATENT APPLICATION

(11) **EP 1 143 363 A1**
(43) Date of publication of application: **10.10.2001**
(21) Application number: 00306605.7
(22) Date of filing: 02.08.2000
(51) Int. Cl.: G06F 17/60

(54) **Personal information management system**

(30) Priority: 07.04.2000 KR 0018256
(71) Applicant: Bit Computer Co., Ltd., Seoul (KR)
(72) Inventor: Cho, Hwi Jeung, Kwangmyong-City, Kyunggi-Do (KR)
(74) Representative: Jacob, Reuben Ellis

(57) **Abstract**

Disclosed is a system for managing personal information including a host server (10) to which a user has access by a computer communication over the Internet and which manages as a database, various items of the user's own personal information including a calling card containing usual personal information, comprising: a database-storing section (101) adapted to store the database therein; a reading authority-authenticating section (103) adapted to have access to the host server and to grant the authority to read the user's own personal data information stored in the database-storing section (101); a data-editing section (105) adapted to edit data including the user's own personal information; a code-granting section (107) adapted to grant a code for another party having access to the host server to recognise the user; an information-requesting section (109) adapted to select another party and to request personal information of the other party; and an information control section (111) adapted to download the personal information of another party selected by the information requesting section (109) and to manage the downloaded personal information of the other party.

## Description

The present invention relates to a system for managing personal information, and more particularly, a system for managing personal information which manages, as a database, various items of a user's own personal information including a calling card containing usual personal information by using a host server to which a user can have access by a computer communication over an Internet-based communication network.

Currently, a computer communication technology employing an Internet-based communication network is rapidly developing. According to this trend, the use of the computer communication technology enables a supply of a large quantity of information to a user.

However, such information largely is provided for many and unspecified persons, but not for each individual person. For this reason, although any personal information is provided to a user, this is only a provision of such information on a homepage.

That is, in fact, a host server is not prepared yet which can store personal information and manage it efficiently to provide information to a user. In other words, a sharing of information in which a user provides his/her own personal information to another party as well as the user is provided with another party's personal information is not performed.

Therefore, there has been a problem in that the management of personal information of each individual person who utilizes a computer communication over the Internet is not accomplished.

Therefore, the present invention has been made in view of the above-mentioned problems, and it is an object of the present invention to provide a system for managing personal information which enables the sharing of personal information between a user himself/herself and another party and the easy management of the shared personal information by a computer communication over the Internet.

According to the present invention, there is provided a system for managing personal information including a host server to which a user has access by a computer communication over the Internet and which manages, as a database, various items of the user's own personal information including a calling card containing usual personal information, comprising:
a database-storing section adapted to store the database therein;
a reading authority-authenticating section adapted to have access to the host server and to grant the authority to read the user's own personal data information stored in the database storing section;
a data-editing section adapted to edit data including the user's own personal information;
a code-granting section adapted to grant a code for another party having access to the host server to recognize the user;
an information-requesting section adapted to select another party and to request personal information of the other party selected; and
an information control section adapted to download the personal information of another party selected by the information requesting section and to manage the downloaded personal information of the other party.

Preferably, the data-editing section may perform a variety of edit functions including reading, writing, or erasing of the user's own personal information.

Preferably, the code-granting section may produce a national code and a classification code according to the national code to grant the national code and the classification code to the user.

It is preferred that the information-requesting section may select another other party by using the code granted by the code-granting section.

It is also preferred that the information control section may determine whether or not another party selected by the information requesting section has access to the host server, and, if it is determined that the other party does not have access to the host server, inform the user of this.

It is also preferred that the information control section may update the user's own personal data information stored in the database-storing section as the present information any time the user updates such information by gaining access to the host server.

The foregoing and other objects, features and advantages of the present invention will become more apparent from the following detailed description given by way of example, and when taken in conjunction with the accompanying drawings in which:
Fig. 1 is a block diagram illustrating the construction of the personal information management system according to a preferred embodiment of the present invention;
Fig. 2 is a control flowchart illustrating the process for performing the operation of the reading-authority authenticating section shown in Fig. 1 according to a preferred embodiment of the present invention; and
Fig. 3 is a control flowchart illustrating the process for performing the operation of the information-requesting section and the information control section.

Reference will now be made in detail to the preferred embodiments of the present invention.

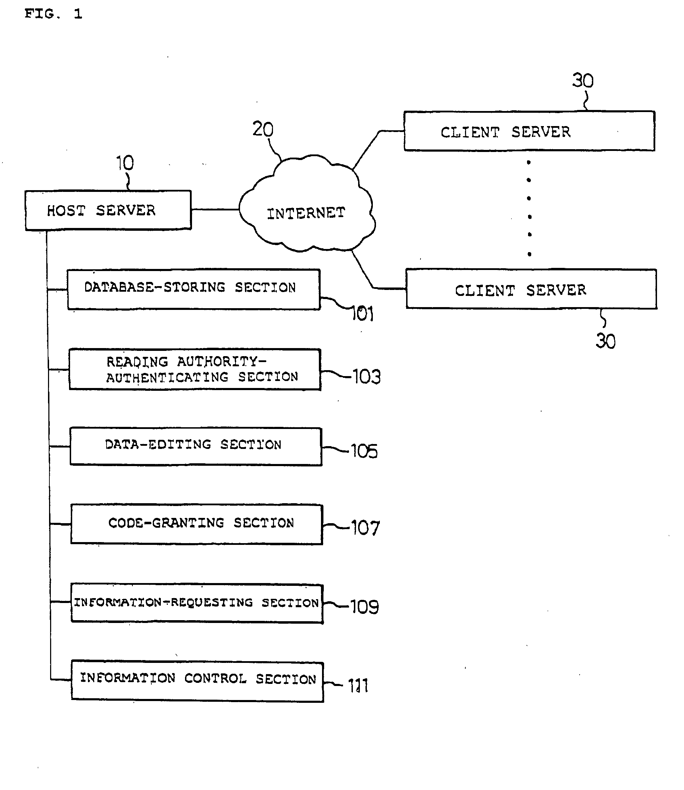

Fig. 1 is a block diagram illustrating the construction of the personal information management system according to a preferred embodiment of the present invention.

Referring to Fig. 1, there is shown a host server 10 and a plurality of client servers 30 each connected to the host server 10 through the Internet.

The host server 10 and the plurality of client servers 30 are connected to each other by a computer communication over the Internet.

The plurality of client servers 30 each includes components which enable a computer communication through an Internet-based communication network, i.e., on-line, for example, a multimedia personal computer having a controller (including a microprocessor) for controlling the overall function of a network PC system, a monitor or a display means, a LAN card for connecting network service blocks (including PC communication) with each other, and a modem.

Also, a client servers 30 includes O/S software based on an O/S (Operating System) for operating a computer system including the multimedia personal computer such as Windows or Unix, and various communication protocols for implementing a connection to the Internet, for example, TCP (Transmission Control Protocol), PPP (Point-to-Point Protocol), HTTP (Hypertext Transfer Protocol), HTML (Hypertext Markup Language), etc.

Further, the client server 30 boots up itself by using the O/S installed in the computer system including the multimedia personal computer in response to an operating signal of a user, runs a network connection program by using a modem embedded therein, and then, performs both a computer communication over the Internet by a web browser software program and an Internet information search function on a corresponding website. At this time, the web browser program includes Netscape Navigator, MS-Explorer, or Plug-in applications.

The personal information management system includes the host server 10, a database-storing section 101, a reading-authority authenticating section 103, a data-editing section 105, a code-granting section 107, an information-requesting section 109, and an information control section 111.

The database-storing section 101 stores various items of the user's own usual personal information as data.

The reading-authority authenticating section 107 has access to the host server 10 and grants the authority to read the user's own personal data information stored in the database-storing section 101.

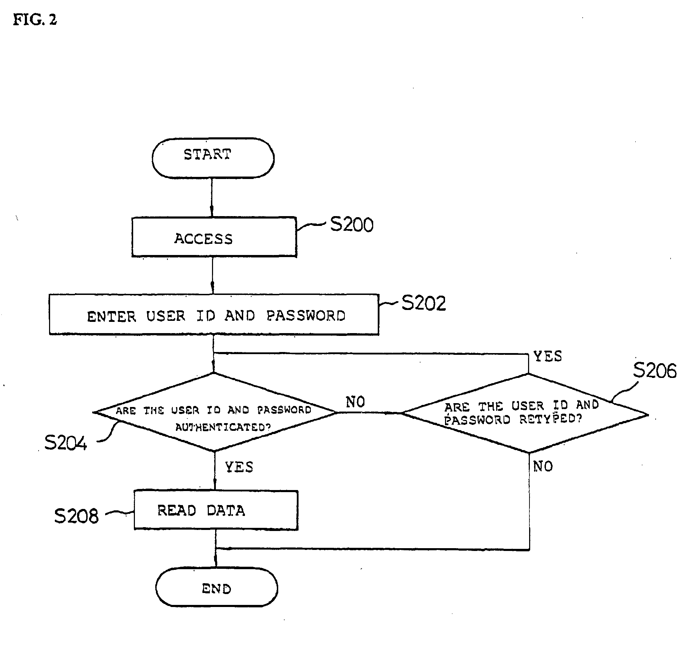

A method for allowing the reading-authority authenticating section 107 to have access to the host server 10 and to read the user's own personal data information stored in the database-storing section 101 will be described in detail hereinafter with reference to Fig. 2.

Fig. 2 is a control flowchart illustrating the process for performing the operation of the reading-authority authenticating section shown in Fig. 1 according to a preferred embodiment of the present invention.

Referring to Fig. 2, at step S200, a user has access to the host server 10 by using a computer communication over the Internet. At subsequent step S202, the user is given a window commanding that the user put a user ID and a password in and then he/her enters the user ID and password in the window. At this time, the program proceeds to step S204 in which a controller determines whether or not the reading-authority authenticating section 103 authenticates the entered user ID and password. If it is determined at step S204 that the entered user ID and password are authenticated by the readingauthority authenticating section 103, the program proceeds to step S208 where the controller allows the user to read the user's own personal data information stored in the database-storing section 101. On the other hand, if it is determined at step S204 that the entered user ID and password are not authenticated by the reading-authority authenticating section 103, the program proceeds to step S206 where the controller requests the user to retype the user ID and password. If it is determined at step S206 that the user has retyped the user ID and password, the program returns to the previous step S204 where the controller performs the following step 208. If, on the other hand, it is determined at step S206 that the user does not retype the user ID and password, the process routine is concluded.

In such a manner as mentioned above, the reading-authority authenticating section 103 authenticates the authority for the user having access to the host server 10 to read the user's own personal data information.

The data-editing section 105 edits data including the user's own personal information. At this point, the data-editing section 105 performs a variety of edit functions including reading, writing, or erasing of the user's own personal information.

The edit functions will be described in detail hereinafter.

First, the edit functions include a function of reading personal information stored in the database-storing section 101. An example of this reading function is a calling card containing usual personal information. In the reading function of the calling card, the data-editing section 105 classifies personal information data stored in the user' own database-storing section 101 by group, and the classified data includes the number and a name list of the other parties registered in the user's own database-storing section 101, a function of searching for another party, etc. Also, the user can read personal information of another party selected by the information-requesting section 109 and edit mail, a note or a card for transmission to another party. In addition, the user can perform the edit functions such as a deletion or a making of the names, etc., of other parties registered and can edit the user's own personal information for provision to another party. To study the editing function of, for example, the calling name, the user selects a calling card that he/she desires to have among calling cards provided by the host server 10, and writes a desired content in the selected calling card. At this time, the user can edit basic personal information as well as a picture and a logo. It is preferable that the edit function of the data-editing section 105 is conducted on-line by using a web page linked to the host server 10.

The code-granting section 107 grants a code for another party having access to the host server to recognize the user. The code-granting section 107 produces a national code and a classification code according to the national code to grant the national code and the classification code to the user. The classification code consists of a combination of various items of information including an age and a region according to information inputted. Further, when the classification code is granted to the user, it may allow the user to have access to the database-storing section 101.

The information-requesting section 109 selects another party whose personal information is desired to be received by the user, and requests the personal information to the other party selected.

The information control section 111 downloads the personal information of the other party selected by the information-requesting section 109 and manages the downloaded personal information of the other party. At this time, the information-requesting section 109 can select the other party by using the code granted by the code-granting section 107. The information control section 111 can determine whether or not the other party selected by the information-requesting section 109 has access to the host server, and, if it is determined that the other party does not have access to the host server, inform the user of this, while updating the user's own personal information stored in the database-storing section 101 any time the user updates such information by gaining access to the host server. That is, the information control section 111 informs the user that another party requests the user's own personal information, or informs the user that another party invites the user to a chatting room.

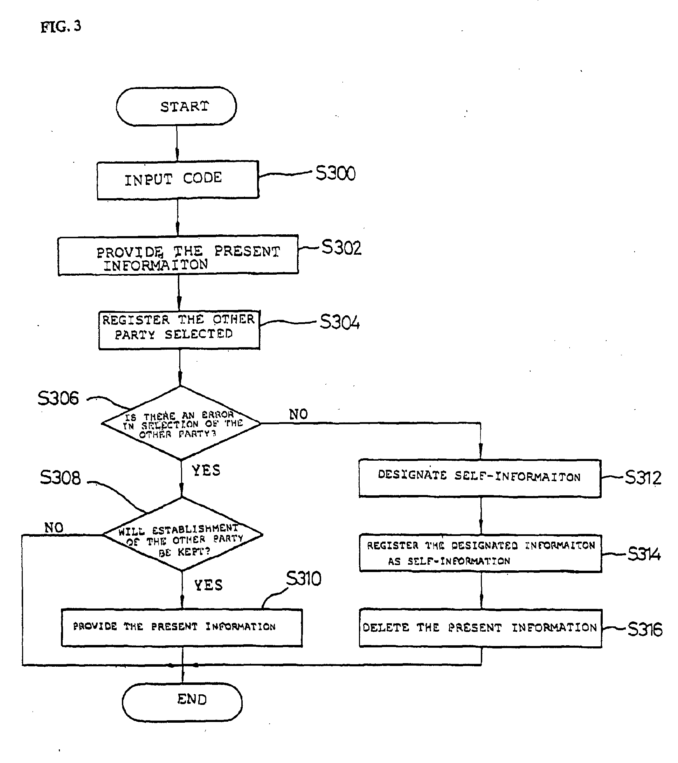

A method of requesting personal information to the other party by using the information-requesting section 109 and the information control section 111 will be described in detail hereinafter with reference to Fig. 3.

Fig. 3 is a control flowchart illustrating the process for performing the operation of the information-requesting section and the information control section.

Referring to Fig. 3, first, the information-requesting section 109 selects another party whose personal information is desired to be downloaded by the user. At this time, at step S300, the information-requesting section 109 selects the other party by using the code granted by the code-granting section 107. At subsequent step S302, the information-requesting section 109 is given information including the name of the other party selected by the code and information including a setting time, etc. At the following step S304, the user registers the other party selected on the basis of the information provided to the user. Then, the program proceeds to step S306 in which the controller determines whether or not the other party interrupts a supply of the other party's own personal information to the information-requesting section 109, or the other party selected by the user is not eligible. If the answer is NO, that is, if it is determined at step S306 that the other party does not interrupt a supply of the other party's own personal information to the information-requesting section 109, or the other party selected by the user is eligible, the program proceeds to step S312 where the user designates the information about the other party in order to be given such information as the user's own information, and at step S314, the user registers it as the user's own information. Then, at step S316, the user deletes the present information provided as information for selecting the other party. On the other hand, if it is determined at step S306 that the other party interrupts a supply of the other party's own personal information to the information-requesting section 109, i.e., does not want to supply the other party's own personal information to the information-requesting section 109, or the other party selected by the user is not eligible, the program proceeds to step S308 where the information control section 111 determines whether or not an establishment of the other party selected will be maintained. If it is determined at step 308 that the establishment of the other party selected will be maintained, the program proceeds to step S310 where the information control section 111 continues to provide the present information to the user.

Like this, the user can be provided with personal information of another party selected and can use another person's personal information as his/her own information.

A method of managing the personal information through the use of the host server 10 and a plurality of elements 101, 103, 105, 107, 109 and 111 each connected to the host server 10 will be described briefly hereinafter.

First, the user has access to the host computer 10 through a computer communication. And then, it is not until the user undergoes an authentication of the authority for him/her to read data including personal information stored in the database-storing section 101 connected to the host server 10 that he/she reads his/her own personal information stored in the database-storing section 101. At this time, the user is provided with information about who invites him/her to a chatting room and who wants to read his/her own personal information by the information control section 111. After that, the user edits the data including his/her own personal information through the data-editing section 105. At this time, the edit function is performed in a various manner as mentioned above. According to the present embodiment, the user can manage efficiently his/her own personal information and personal information of another party through a computer communication. Further, the information-requesting section 109 and the information control section 111 allows the user to request personal information of another party and manage it as database.

As can be seen from the foregoing, the personal information managing system of the present invention enables efficient management of a user's personal information by a computer communication over the Internet. The user can be provided with his/her own personal information as well as that of another party at a real time by a computer communication provided at a real time. After all, the present invention has a positive effect in that the user can manage efficiently personal information due to personal relations which become more complicated, at a real time on-line.

While this invention has been described in connection with what is presently considered to be the most practical and preferred embodiment, it is to be understood that the invention is not limited to the disclosed embodiment, but, on the contrary, it is intended to cover various modifications within the scope of the appended claims. As used herein the terms "Windows", "Unix", "Netscape Navigator", "MS-Explorer", and "Plug-in" are registered trade marks.

## Claims

1. A system for managing personal information including a host server to which a user has access by a computer communication over the Internet and which manages as a database, various items of the user's own personal information including a calling card containing usual personal information, comprising:
a database-storing section adapted to store the database therein;
a reading authority-authenticating section adapted to have access to the host server and to grant the authority to read the user's own personal data information stored in the database-storing section;
a data-editing section adapted to edit data including the user's own personal information;
a code-granting section adapted to grant a code for another party having access to the host server to recognize the user;
an information-requesting section adapted to select another party and to request personal information of the other party; and
an information control section adapted to download the personal information of another party selected by the information requesting section and to manage the downloaded personal information of the other party.

2. The system according to claim 1, wherein the data editing section performs a variety of edit functions including reading, writing, or erasing of the user's own personal information.

3. The system according to claim 1 or claim 2, wherein the code granting section produces a national code and a classification code according to the national code to grant the national code and the classification code to the user.

4. The system according to any preceding claim, wherein the information-requesting section selects the other party by using the code granted by the code-granting section.

5. The system according to any preceding claim, wherein the information control section determines whether or not the other party selected by the information requesting section has access to the host server, and, if it is determined that the other party does not have access to the host server, informs the user of this.

6. The system according to any preceding claim, wherein the information control section updates the user's own personal data information stored in the database storing section as the present information any time the user updates such information by gaining access to the host server.

7. A method of managing personal information, **characterised by** the step of accessing remotely a system according to any one of claims 1 to 6.
